# FASCICULE DE BREVET EUROPEEN

(11) **EP 0 976 084 B1**
(45) Date de publication et mention de la délivrance du brevet: **05.10.2005**
(21) Numéro de dépôt: 99900940.0
(22) Date de dépôt: 15.01.1999
(51) Int. Cl.: G06K 7/00, G06K 7/10

(54) **PROCEDE PERFECTIONNE DE GESTION DES COLLISIONS DANS UN SYSTEME D'ECHANGE DE DONNEES SANS CONTACT**
VERBESSERTES VERFAHREN ZUR VERWALTUNG VON KOLLISIONEN IN EINEM DATENAUSTAUSCHSYSTEM OHNE KONTAKTE
IMPROVED METHOD FOR COLLISION MANAGEMENT IN A NON-CONTACT DATA EXCHANGE SYSTEM

(30) Priorité: 15.01.1998 FR 9800383
(43) Date de publication de la demande: 02.02.2000
(73) Titulaire: Innovatron Electronique (Societe Anonyme), 75006 Paris (FR)
(72) Inventeur: GRIEU, François, F-75012 Paris (FR)
(74) Mandataire: Dupuis-Latour, Dominique
(86) Numéro de dépôt international: PCT/FR1999/000080
(87) Numéro de publication internationale: WO 1999/036878

(56) Documents cités:
- EP-A- 0 553 905
- WO-A-98/39725

## Description

L'invention concerne la communication sans contact entre un objet portatif et un terminal.

L'échange de données sans contact est bien connu ; parmi les applications de cette technique, on trouve - de façon non limitative - le contrôle d'accès et le télépéage, par exemple pour l'accès et le péage des transports en commun.

Dans ce dernier exemple, chaque usager est muni d'un objet portatif du type "carte sans contact" ou "badge sans contact", qui est un objet susceptible d'échanger les informations avec un terminal ou borne fixe en approchant l'objet portatif de ce dernier de manière à permettre un couplage mutuel non galvanique (par "terminal", on entendra le terminal émetteur/récepteur de données apte à coopérer avec les objets portatifs).

L'invention vise la situation particulière dans laquelle une pluralité d'objets portatifs peuvent être simultanément présents dans le champ d'action du terminal, et où il n'existe pas de moyen physique, par exemple l'insertion dans une fente, pour isoler l'arrivée d'un objet unique dans ce champ.

Le but est d'échanger des données avec un objet portatif choisi. Pour cela, un identifiant unique ou quasi-unique est affecté à chaque objet portatif. Si un objet portatif se trouve dans la portée du terminal, il transmet au terminal son identifiant. Cette transmission peut être brouillée si plusieurs objets portatifs répondent en même temps. En revanche, si le terminal reçoit un identifiant correctement, le terminal renvoie un message comprenant l'identifiant, que les cartes qui le reçoivent ne traitent que si l'identifiant est identique au leur, déclenchant dans ce cas la phase d'échange des données entre cette carte spécifique et le terminal.

Dans la mesure où les signaux émis par les différents objets portatifs peuvent se chevaucher entre eux dans le temps, le terminal doit être pourvu d'un mécanisme d' "anti-collision" permettant de détecter ces situations et les gérer en provoquant une réémission des signaux par les objets portatifs.

Plusieurs types de procédés d'anti-collision existent à ce jour, dont on peut identifier les suivants :
― "Slotted Aloha", dans lequel chacun des objets portatifs répond à un appel général émis par le terminal dans un parmi plusieurs intervalles de temps prédéfinis (les "slots") choisi aléatoirement par les cartes, et le terminal en sélectionne une seule ensuite pour dialogue (voir FR-A-2 666 187). La probabilité de réponse à l'appel par la carte est fixe et égale à 100 %. La sélection est réussie si la réponse d'une carte se retrouve seule dans un slot ;
― "Probabiliste", dans lequel la probabilité de réponse de chaque carte à un appel général suite à une collision de réponses reçues au terminal est inférieure à 100 % et se réduit jusqu'à ce qu'une réponse unique soit obtenue (cf. Le WO-A- 98/39725, publié le 11.09.98 et faisant partie de l'état de la technique au sous de l'art. 54(3) CBE. L'appel général peut inclure un simple avis de collision ou non lors de l'appel général précédent, auquel cas la carte définit elle-même l'augmentation ou la diminution de la probabilité de sa réponse, comme dans le EP-A-0 702 324, mais, de préférence, comme dans le WO-A-98/39725 précité, l'appel général inclut un paramètre défini par le terminal en fonction de l'historique des collisions et c'est la valeur de ce paramètre qui définit la probabilité de réponse de la carte.

Le EP-A-0 553 905 décrit également une telle technique probabiliste, mettant en oeuvre différents types de messages d'appel.

La présente invention part de la constatation que certains aspects des deux systèmes peuvent se combiner utilement pour obtenir un compromis amélioré entre les différents facteurs qui influencent les performances du système, tels que le nombre maximal d'objets portatifs simultanément présents qui peuvent être traités, la durée du cycle d'appel général permettant la réponse de tous les objets portatifs éventuellement présents et la durée du cycle d'appel général en présence d'un objet portatif unique (souvent le cas le plus fréquent).

Aussi, en présence de la coexistence de populations d'objets portatifs de plusieurs types, il existe un intérêt pour un système '"hybride" dans lequel un même terminal peut fonctionner indifféremment avec des objets portatifs des différents types, et même avec des objets portatifs de type mixte ; de préférence un objet portatif hybride fonctionnerait avec des terminaux conçus pour un seul des types de procédé anti-collision aussi.

Plus précisément, le procédé de l'invention est du type génital enseigné par le EP-A-0 553 905 précité, et il comprend les caractéristiques énoncées par la partie caractérisante de la revendication 1.

Les sous-revendications exposent des modes de mise en oeuvre avantagent de ce procédé.

On va maintenant donner une description détaillée du procédé de l'invention, avec diverses variantes et formes de mise en oeuvre.

On reprendra d'abord le système probabiliste du WO-A-98/39725 précité et on indiquera également la notation utilisée. Par ailleurs, les objets portatifs étant souvent en forme de cartes, ils seront ainsi appelés par commodité, sans que cela ait de caractère limitatif.
― De manière répétitive le lecteur émet l'appel général, un message d'interrogation (ci-après désigné "Query") contenant un paramètre P, puis se met en situation de recevoir la réponse éventuelle d'une carte. Chaque carte qui détecte Query choisit de répondre ou non avec une probabilité qui est fonction de P d'après un numéro aléatoire X, tiré dans la carte. La réponse de la carte (ou "Answer To Query", ATQ) comprend au moins un identifiant unique à chaque carte, et facultativement d'autres éléments d'identification.
― Dans une étape ultérieure le lecteur émet au moins un message applicatif contenant cet identifiant, auquel seule la carte porteuse de cette identifiant répondra (c'est à dire que les cartes comprennent, pour ce ou ces messages ultérieurs, une étape de comparaison avec l'identifiant qu'elle contiennent).
― Facultativement, un message applicatif est accompagné d'un identifiant plus court choisi par le lecteur. Dans les messages applicatifs suivant l'acquittement de la carte pour ce premier message applicatif, l'identifiant court sera utilisé en remplacement de l'identifiant unique initial (dans le but de diminuer le volume des données échangées).
   L'identifiant unique peut être un numéro de série prédéterminé, ou un nombre aléatoire de quatre octets par exemple. Cette seconde possibilité a l'avantage de ne pas permettre de reconnaître la carte d'une utilisation à l'autre, empêchant de suivre son utilisation par le mécanisme de l'identifiant unique. Pour un identifiant aléatoire, il sera choisi par chaque carte à l'initialisation, ou à la réception de Query et peut être utilisé par la suite du choix de réponses, dans un procédé du type de la variante du "Slotted Aloha" mentionné ci-dessus.

La probabilité de réponse de la carte à un message d'interrogation du lecteur est déterminée par un calcul de la carte qui fait évoluer cette probabilité selon que, lors des interrogations précédentes, la carte a déjà répondu ou non. Cela suppose l'existence d'un variable d'état dans la carte reflétant ses décisions passées (désignée I ci-après). Le message d'interrogation Query contient de préférence un paramètre P de modulation de probabilité, comme le système du WO-A-98/39725 précité, quoique ceci soit opest déterminé tionnel.

Considérons un premier Exemple A, particulièrement simple, où:
a) le lecteur émet de manière régulière des interrogations toutes identiques, sans paramètre ;
b) à sa mise sous tension ou à son entrée dans le champ, la carte initialise une variable interne 1 = 1 ;
c) à la réception de tout appel du lecteur, la carte choisi aléatoirement un entier dans l'intervalle [1 ... I] ; si le nombre choisi est 1, la carte répond à l'interrogation du lecteur en émettant son identifiant, et réinitialise I = 8 ; dans le cas contraire la carte diminue I de 1 et n'émet pas son identifiant.

On voit que la probabilité de réponse de la carte à l'appel du lecteur est de 1 à l'issue de l'étape b), toutes les cartes répondant au premier appel, puis la probabilité est de 1/8 à l'issue de l'étape c). Aux appels suivants, la probabilité est remise à 1/8 si la carte a répondu ; dans le cas contraire, tant que la carte continue à ne pas répondre, la probabilité de réponse évolue successivement à 1/7, 1/6, 1/5, 1/4, 1/3, 1/2, 1. Il s'écoule au maximum huit interrogations entre deux réponses de la carte, ce qui garantit qu'en huit interrogations maximum le lecteur connaîtra l'identifiant de la carte, dès lors que la carte est assez proche pour qu'il n'y ait pas d'erreur de communication et si aucune collision ne se produit.

Une variante (Exemple B) donne le même comportement de la carte, mais simplifie les tirages aléatoires et en réduit le nombre :
c) à la réception d'un appel du lecteur, la carte examine I ; si I = 1 la carte répond à l'interrogation du lecteur en émettant son identifiant et réinitialise I à un entier choisi aléatoirement dans l'intervalle [1 ... 8] ; dans le cas contraire la carte diminue I de 1 et n'émet pas son identifiant.

Un perfectionnement, applicable plus généralement, consiste à ce que le lecteur puisse paramétrer la probabilité de réponse de la carte ; par exemple, il joint à chaque interrogation un paramètre P utilisé à l'étape c), remplaçant la constante 8. Le lecteur peut ainsi fournir une valeur optimale, par exemple d'autant plus élevée que la dimension de la zone de communication utile du lecteur, et sa destination, rend plus probable la présence simultanée de plusieurs cartes. Un perfectionnement supplémentaire consiste en ce que le lecteur augmente ce paramètre s'il détecte des collisions, et le diminue s'il n'en détecte pas.

Un perfectionnement applicable indépendamment du précédent consiste à prévoir dans l'appel du lecteur un autre paramètre A, comparé à une valeur prédéterminée inscrite dans la mémoire de la carte, toute réponse à appel étant inhibée selon le résultat de cette comparaison. L'inhibition peut par exemple avoir lieu si le paramètre A, identifiant le type d'application (parmi porte-monnaie, débit/crédit bancaire, téléphonique, contrôle d'accès piscine, ...) destiné au lecteur, ne correspond pas à la valeur inscrite dans la carte et représentant sa destination. Ou encore, en l'absence d'élément dans l'intersection de l'ensemble des applications traitées par le lecteur et décrites par A, avec l'ensemble des applications traitées par la carte et décrites dans la mémoire de la carte. Par ce perfectionnement, on limite le nombre de cartes susceptibles de répondre à celles qui sont pertinentes, réduisant la probabilité de collision.

Un autre perfectionnement applicable indépendamment, est que le lecteur modifie le rythme de ses interrogations selon qu'il détecte ou non un message d'au moins une carte : l'interrogation suivante est plus rapprochée de la précédente si, à l'issue de cette dernière, le lecteur n'a détecté aucune réponse, que s'il a détecté la réponse d'une carte. L'effet est d'augmenter le nombre d'interrogations, tout en permettant cependant la réception complète de la réponse d'une carte si une telle réponse est reçue. Le délai d'attente entre la fin d'une interrogation et le début de la suivante en l'absence de détection de réponse des cartes est choisi comme la somme du délai maximal entre la fin de l'interrogation et le début de la réponse de la carte, plus au minimum le délai d'activation du dispositif du lecteur détectant la réponse de carte (typiquement, un dispositif détectant la sous-porteuse émise par la carte).

Le perfectionnement proposé par la présente invention consiste à prévoir deux sortes d'interrogations du lecteur, désignées "Query" et "Marker". Query réinitialise la probabilité de réponse (Query contenant le paramètre P). Marker fait répondre la carte avec une probabilité qui évolue selon qu'elle a répondu précédemment ou non. Par exemple, ce perfectionnement peut modifier l'Exemple A de la façon suivante :
b) à sa mise sous tension ou à son entrée dans le champ, la carte réinitialise la variable interne I = 0.
c) à la réception d'un appel du lecteur, la carte détermine s'il est de type Query et, si oui, réinitialise I à un entier choisi aléatoirement dans l'intervalle [1 ... 8], puis fait comme dans le cas d'un Marker. Dans les deux cas, si I = 1 la carte répond à l'interrogation du lecteur en émettant son identifiant, ensuite, dans tous les cas elle diminue I de 1, sauf s'il est déjà nul.

On voit que la probabilité de réponse de la carte après un Query est de 1/8 puis, si elle continue à ne pas répondre, la probabilité après un Marker évolue successivement de 1/7, 1/6, 1/5, 1/4, 1/3, 1/2, 1. Suivant une réponse de la carte ou à l'issue de l'étape b), la probabilité de réponse à un Marker, s'il y en a un, est 0 jusqu'au prochain Query. Un avantage est que le paramètre P (et A s'il est utilisé) n'est nécessaire que dans Query.

Quand une carte a reçu un message applicatif pour lequel la comparaison avec son identifiant, court ou long, a donné un résultat positif, la carte mémorise cet événement et ne répond plus au Query ou Marker du lecteur jusqu'à un événement particulier, comme la réinitialisation de la carte et/ou la réception d'un message du lecteur présentant une caractéristique particulière. Cela permet d'exclure du mécanisme d'énumération les cartes déjà traitées, ce qui réduit la probabilité de collision et augmente la densité temporelle des Query et Marker.

Une variante consiste à ce que les Marker soient numérotés par le lecteur, et que ce numéro incrémental soit pris en compte dans la probabilité de réponse de la carte ; par exemple ce numéro peut être comparé à I (la réponse de la carte étant inhibée en cas de désaccord), ou plus généralement combiné à la variable d'état contenue dans la carte.

Une autre variante consiste à prévoir une inhibition et/ou modification de la variable d'état en cas d'incohérence de certaines caractéristiques (telles que somme de contrôle) des informations reçues par la carte.

Dans un cas plus général de réalisation de la présente invention, la probabilité de réponse à Query des cartes est fonction de deux nombres entiers M et N. La décision de répondre ou non est prise dans la carte et comprend les étapes suivantes :
- détermination des nombres M et N, dont au moins l'un est fonction de P,
- tirage aléatoire uniformément distribué d'un entier X, avec 0 ≤ X < N,
- réponse si X est inférieur à M, c'est à dire avec la probabilité M/N.

Deux cas particuliers de tels procédés correspondraient aux systèmes qui existent déjà :
― dans un exemple du système probabiliste, N = 64 et M = P+1, c'est à dire probabilité de réponse (P+1)/64 ;
― dans un système du type Slotted Aloha, on aurait plutôt N = 2^{P} et M = 1, c'est à dire probabilité de réponse 1/(2^{P}).

Toutefois, dans les deux cas, un seul des paramètres M et N est variable, l'autre étant fixe. Le fait que les deux soient variables confère l'avantage de souplesse dans le choix des caractéristiques de la fonction anti-collision.

Les deux paramètres M et N pourraient être des numéros contenus dans le cycle du message d'appel général, mais au mois un des paramètres également peut être constitué ou dérivé dans la carte elle-même. Dans les exemples qui suivent, il est supposé que le message Query émis par le terminal contient un nombre M définissant P et pouvant varier par exemple de la manière décrite dans le WO-A- 98/39725 précité , comme dans un exemple de réalisation préféré de l'invention. L'évolution dynamique du paramètre P en fonction des collisions détectées, reste applicable.

Les différents paramètres variables décrits dans les exemples suivants peuvent être employés seuls avec l'utilisation d'un paramètre M variable, ou peuvent y être associés à plusieurs, ou peuvent même être employés à plusieurs sans qu'un tel paramètre M soit utilisé.

Exemple n° 1 : Query comprend un champ de sélection d'application A, qui inhibe conditionnellement la réponse des cartes ; par exemple la carte répond si les conditions précédentes sur P et X sont réunies, et si A égale une valeur prédéterminée contenue dans la carte. Ceci permet de réduire la probabilité de collision quand plusieurs cartes sont dans le champ du lecteur, mais que l'on sait que seules celles porteuses d'une certaine application désignée par A sont susceptibles d'être traitées. La condition sur A peut bien sûr être plus complexe, par exemple A peut être une liste d'applications, la carte répondant si l'une de ces applications est présente dans une liste d'applications mémorisée dans la carte.

Exemple n° 2 : le lecteur émet, après Query et distinguables de Query, un ou plusieurs messages Marker pouvant servir pour temporiser les réponses ATQ des cartes, ce qui permet un gain de temps dans la transmission et gestion des réponses.

Plusieurs variantes sont possibles.

Cas 2.1 : Les messages Marker contiennent, ou permettent d'en dériver dans les cartes, un indice I (facultativement ils pourraient inclure aussi le paramètre P et éventuellement A). I est initialisé (par exemple à 0) lors de chaque Query et s'incrémente à chaque Marker. Ce mécanisme de numérotation peut être implémenté dans le lecteur et inclus dans le Marker et/ou dans la carte (qui initialise I à 0 à l'émission et/ou réception de Query et l'incrémente à l'émission et/ou réception de Marker). Ce mécanisme de numérotation est implémenté au moins dans le lecteur ou les cartes, de sorte qu'à la réception de Marker la valeur I est connue des cartes.

La carte répond un ATQ au Marker en fonction de I, P, d'un tirage aléatoire X (P et X peuvent être ceux d'un Query ou Marker précédent et ne sont pas nécessairement recalculés à chaque Marker). La probabilité de réponse de la carte est plus élevée si la carte n'a pas encore répondu depuis le précédent Query, que si elle a déjà répondu. Aussi, en cas de collision après un Marker, le procédé peut revenir au message Query et réitérer le cycle d'appel, avec réinitialisation de I, de sorte que la probabilité globale de réponse des cartes dans la portée du terminal augmente quand il n'y a pas de collision et diminue quand il y en a. Cet exemple de procédé est avantageux quand un message à la fin des échanges de données inhibe toute réponse d'une carte qui a déjà répondu, du moins jusqu'à un appel général ultérieur.

Typiquement A, P et le tirage aléatoire X sont définis par le message Query et la condition de réponse est que I*M ≤ X ≤ I*M+M. De la sorte, après N/M messages (un Query, et N/M-1 Marker, après quoi le cycle recommence) toutes les cartes auront répondu au moins une fois.

On obtient grâce à ce perfectionnement une caractéristique avantageuse du "Slotted Aloha" : pour toute valeur du paramètre P, pour une seule carte dans le champ du lecteur, et en l'absence d'erreur de communication, on est assuré de capter l'identifiant de la carte en un nombre borné de messages 2*N/M à compter de l'entrée de la carte dans le champ, en supposant que la carte ne répond qu'à partir du premier Marker reçu.

On voit que l'on obtient un résultat comparable au "Slotted Aloha" avec N/M slots, à la différence que le début des slots est indiqué explicitement par le lecteur en émettant des Marker, au lieu de l'être implicitement par chronométrage effectué par les cartes. Par rapport au "Slotted Aloha" cela évite un chronométrage précis, aussi bien par les cartes que par le lecteur. Un autre avantage par rapport au système probabiliste est que si P est absent des Marker (et A, voir ci-dessus) la durée du Marker est réduite par rapport à Query, et que la carte ne doit pas nécessairement tirer un autre nombre aléatoire à chaque Marker, réduisant encore la durée du cycle. Même, la carte peut répondre systématiquement au n-ième Marker, où n est un numéro caractéristique de la carte, par exemple une partie de son numéro de série.

On notera que si le terminal n'émet que Query, sans Marker, le terminal est équivalent au système probabiliste, et les cartes de cet exemple sont compatibles avec les terminaux des deux systèmes.

Cas 2.2 : On peut prévoir que le lecteur inclue l'indice I dans le ou les messages applicatifs ultérieurs (en particulier le premier), et que ce champ du message applicatif soit comparé par la carte à l'indice I, au même titre que la carte effectue la comparaison à son identifiant d'un champ du message applicatif ; on a de la sorte un renforcement de la sélectivité du mécanisme de sélection sans allongement du champ d'identifiant dans l'ATQ.

Cas 2.3 : On peut prévoir que la numérotation soit à la fois explicite dans les Marker et implicite par la carte, et que la carte ne réponde que s'il y a concordance ; ce cas est surtout avantageux en complément du perfectionnement précédent.

Exemple n° 3 : en variante ou en complément des exemples précédents, le terminal peut faire varier l'intervalle entre deux Marker successifs. En particulier, si aucune réponse ATQ n'est reçue au terminal, il n'est plus nécessaire d'attendre le temps usuel d'échange de données entre une carte et le terminal. Dans cet exemple, la carte, si elle répond à Query ou Marker, le fait en émettant un signal (début de l'ATQ) dans un délai maximal T₀ suivant la fin de Query ou Marker. Le lecteur cherche ce signal, et s'il n'est pas présent dans un délai approprié (T₁ ≥ T₀ + délai de détection par le lecteur) suivant la fin de Query, émet de suite un nouveau message de type Query ou Marker. En présence du signal, l'émission de Query et Marker est donc inhibée jusqu'à la fin de l'émission par les cartes (au moins tant que ne s'est pas écoulé un délai prédéterminé T₂ correspondant à la longueur maximale de la réponse attendue, et/ou tant qu'une erreur ou collision n'a pas été détectée par le lecteur dans le message reçu de la ou des cartes).

L'avantage est de permettre une scrutation plus rapide des cartes, puisque le nombre de Query (et/ou Marker) par unité de temps est nettement augmenté. Dans l'hypothèse où la durée de l'ATQ est grande par rapport aux Query et Marker, et notamment dans un système utilisant l'exemple n° 1, les opportunités de réponse par les cartes sont beaucoup plus nombreuses.

## Revendications

1. Un procédé de gestion des collisions dans un système d'échange de données entre des objets portatifs et au moins un terminal d'émission-réception de données apte à coopérer avec une pluralité desdits objets portatifs simultanément présents dans le champ de communication du terminal, ce procédé comprenant les étapes successives suivantes :
a) émission par le terminal vers les objets portatifs de messages d'appel de deux types différents, comprenant :
(i) des messages d'un premier type, et
(ii) des messages d'un second type, émis en succession après un message du premier type et aptes à commander de manière probabiliste une réponse des objets portatifs ;
b) émission conditionnelle par l'objet portatif vers le terminal d'un message de réponse à l'appel avec une probabilité de réponse pouvant être inférieure à 100 %, cette réponse contenant un identifiant propre à l'objet portatif ;
c) à réception par le terminal d'une réponse d'un objet portatif identifié, et en l'absence de collision de cette réponse avec une réponse émise par un autre objet portatif, établissement d'une liaison de communication de données spécifique entre le terminal et l'objet portatif identifié et poursuite d'un échange de données, et retour à l'étape a) pour une nouvelle itération ; et
d) en l'absence de réception exempte de collision, retour à l'étape a) pour une nouvelle itération ;
procédé ***caractérisé en ce que** :*
- les messages du premier type sont des messages d'interrogation contenant un paramètre apte à initialiser la valeur de ladite probabilité de réponse par les objets portatifs en fonction de ce paramètre, et
- les messages du second type sont des messages marqueurs aptes à commander les objets portatifs pour qu'ils modifient ladite valeur de probabilité en l'absence de réponse antérieure à un message d'appel.

2. Le procédé de la revendication 1, dans lequel les objets portatifs répondent sélectivement dans des intervalles de temporisation suivant la réception des messages marqueurs.

3. Le procédé de la revendication 2, dans lequel le choix parmi les intervalles de temporisation est déterminé de manière probabiliste par un tirage au sort aléatoire ou pseudo-aléatoire opéré par l'objet portatif sur réception d'un message d'interrogation.

4. Le procédé de l'une des revendications 1 à 3, dans lequel le terminal réémet un message d'interrogation sur détection d'une collision.

5. Le procédé de l'une des revendications 1 à 4, dans lequel la modulation par l'objet portatif, en l'absence de réponse antérieure à un message d'appel, de la valeur de probabilité sur réception d'un message marqueur est fonction de la valeur d'un indice modifié sur réception d'un message marqueur.

6. Le procédé de la revendication 5, dans lequel ledit indice est incrémenté à chaque réception d'un nouveau message marqueur et réinitialisé sur réception d'un message d'interrogation subséquent.

7. Le procédé de l'une des revendications 1 à 6, dans lequel le terminal réduit l'intervalle de temps séparant deux messages d'appel successifs en cas d'absence de réponse d'un objet portatif identifié dans un délai prédéterminé.

8. Le procédé de l'une des revendications 1 à 7, dans lequel l'émission d'une réponse par l'objet portatif aux messages d'appel est susceptible d'être inhibée par la réception d'un message spécifique émis par le terminal et contenant un identifiant correspondant à celui de l'objet portatif, l'inhibition étant levée à l'initialisation de l'objet portatif et/ou à réception d'un message à cet effet.

9. Le procédé de la revendication 1, dans lequel :
- le message du premier type contient un paramètre de valeur N ;
- à réception du message du premier type la probabilité de réponse est initialisée à 1/N et l'objet portatif répond avec cette probabilité 1/N ;
- à réception d'un message du second type la probabilité de réponse de l'objet portatif :
· est nulle si celui-ci a répondu à un message depuis l'initialisation,
· dans le cas contraire, évolue à chaque réception d'un message du second type, avec des valeurs de probabilité successives 1/(N-1), 1/(N-2) ... 1/2, 1.

10. Le procédé de la revendication 9, comprenant les étapes successives suivantes à réception d'un message :
- pour un message du premier type, positionnement d'une variable I à un entier aléatoire compris dans l'intervalle [1, N] ;
- pour un message du premier ou du second type, émission d'une réponse lorsque I = 1 ;
- pour un message du premier ou du second type, diminution de la variable I d'une unité.

11. Le procédé de la revendication 9, dans lequel les messages du second type sont numérotés par le terminal et la probabilité de réponse de la carte est fonction de ce numéro incrémental.

12. Le procédé de la revendication 11, comprenant les étapes successives suivantes à réception d'un message :
- pour un message du premier type, positionnement d'une variable I à un entier aléatoire compris dans l'intervalle [1, N] et émission d'une réponse lorsque I = 1 ;
- pour un message du second type, comparaison dudit numéro incrémental de ce message à la valeur de la variable I et inhibition de la réponse en cas de désaccord.

## Patentansprüche

1. Verfahren zur Handhabung von Kollisionen in einem System zum Datenaustausch zwischen tragbaren Objekten und mindestens einem Datensende-Empfangsterminal, das angepasst ist, mit einer Mehrzahl der tragbaren Objekte zusammenzuwirken, die in einem Kommunikationsfeld des Terminals gleichzeitig anwesend sind, wobei das Verfahren die folgenden, aufeinander folgenden Schritte umfasst:
a) Senden durch das Terminal an die tragbaren Objekte von Aufrufnachrichten zweier verschiedener Typen, umfassend:
(i) Nachrichten einer ersten Art, und
(ii) Nachrichten einer zweiten Art, gesendet in der Folge nach einer Nachricht der ersten Art und geeignet, auf probabilistische Weise eine Antwort der tragbaren Objekte zu steuern;
b) bedingtes Senden, durch das tragbare Objekt an das Terminal, einer Antwortnachricht auf den Aufruf mit einer Antwortwahrscheinlichkeit, die niedriger als 100% sein kann, wobei diese Antwort einen dem tragbaren Objekt eigenen Identifikator enthält;
c) beim Empfang durch das Terminal einer Antwort eines identifizierten tragbaren Objekts und in Abwesenheit einer Kollision dieser Antwort mit einer Antwort, die von einem anderen tragbaren Objekt gesendet wurde, Aufbau einer spezifischen Verbindung zur Datenkommunikation zwischen dem Terminal und dem identifizierten tragbaren Objekt und Weiterverfolgung eines Datenaustauschs und Rückkehr zum Schritt a) für eine neue Iteration; und
d) in Abwesenheit eines Empfangs ohne Kollision, Rückkehr zum Schritt a) für eine neue Iteration;
wobei das Verfahren **dadurch gekennzeichnet ist, dass**:
- die Nachrichten der ersten Art Abfragenachrichten sind, die einen Parameter beinhalten, der dazu geeignet ist, den Wert der Wahrscheinlichkeit der Antwort durch die tragbaren Objekte in Abhängigkeit von diesem Parameter zu initialisieren, und
- die Nachrichten der zweiten Art Markierernachrichten sind, die dazu geeignet sind, die tragbaren Objekte so zu steuern, dass sie den Wahrscheinlichkeitswert in Abwesenheit einer vorhergehenden Antwort auf eine Aufrufnachricht modifizieren.

2. Verfahren gemäß Anspruch 1, in dem die tragbaren Objekte selektiv in Verzögerungsintervallen antworten, die dem Empfang der Markieremachrichten folgen.

3. Verfahren gemäß Anspruch 2, in dem die Auswahl aus den Verzögerungsintervallen auf probabilistische Weise durch eine zufällige oder pseudozufällige Verlosung bestimmt werden, die durch das tragbare Objekt auf den Empfang einer Abfragenachricht vorgenommen wird.

4. Verfahren gemäß einem der Ansprüche 1 bis 3, in dem das Terminal auf die Entdeckung einer Kollision hin erneut eine Abfragenachricht aussendet.

5. Verfahren gemäß einem der Ansprüche 1 bis 4, in dem die Modulierung durch das tragbare Objekt, in Abwesenheit einer vorhergehenden Antwort auf eine Aufrufnachricht, des Wahrscheinlichkeitswerts auf den Empfang einer Markierernachricht hin vom Wert einer Kennziffer abhängt, die auf den Empfang einer Markierernachricht hin modifiziert wird.

6. Verfahren gemäß Anspruch 5, in dem die Kennziffer bei jedem Empfang einer neuen Markierernachricht inkremtiert wird, und auf den Empfang einer nachfolgenden Abfragenachricht hin reinitialisiert wird.

7. Verfahren gemäß einem der Ansprüche 1 bis 6, in dem das Terminal das Zeitintervall verringert, welches zwei aufeinander folgende Aufrufnachrichten trennt, im Fall der Abwesenheit einer Nachricht eines identifizierten tragbaren Objekts innerhalb eines vorbestimmten Zeitraums.

8. Verfahren gemäß einem der Ansprüche 1 bis 7, in dem das Senden einer Antwort durch das tragbare Objekt auf die Aufrufnachrichten durch den Empfang einer spezifischen Nachricht gehemmt werden kann, die durch das Terminal gesendet wird und einen Identifikator beinhaltet, der dem des tragbaren Objekts entspricht, wobei die Hemmung bei der Initialisierung des tragbaren Objekts und/oder beim Empfang einer diesbezüglichen Nachricht erhoben wird.

9. Verfahren gemäß Anspruch 1, in dem:
- die Nachricht der ersten Art einen Parameter mit Wert N umfasst;
- beim Empfang der Nachricht der ersten Art die Antwortwahrscheinlichkeit mit 1/N initialisiert wird und das tragbare Objekt mit dieser Wahrscheinlichkeit von 1/N antwortet;
- beim Empfang einer Nachricht der zweiten Art die Antwortwahrscheinlichkeit des tragbaren Objekts:
• null ist, wenn dieses auf eine Nachricht seit der Initialisierung geantwortet hat,
• im gegenteiligen Fall auf jeden Empfang einer Nachricht der zweiten Art hin entwickelt wird, mit den aufeinander folgenden Wahrscheinlichkeitswerten 1/(N-1), 1/(N-2) ... 1/2, l.

10. Verfahren gemäß Anspruch 9, umfassend die folgenden aufeinander folgenden Schritte beim Empfang einer Nachricht:
- für eine Nachricht der ersten Art, Einstellung einer Variablen I auf eine zufällige ganze Zahl innerhalb des Intervalls [1, N];
- für eine Nachricht der ersten oder der zweiten Art, Senden einer Antwort bei I = 1;
- für eine Nachricht der ersten oder zweiten Art, Verringerung der Variablen I um eine Einheit.

11. Verfahren gemäß Anspruch 9, in dem die Nachrichten der zweiten Art durch das Terminal nummeriert werden und die Antwortwahrscheinlichkeit der Karte von dieser Inkrementalnummer abhängig ist.

12. Verfahren gemäß Anspruch 11, umfassend die folgenden aufeinander folgenden Schritte auf den Empfang einer Nachricht hin:
- für eine Nachricht der ersten Art, Einstellung einer Variablen I auf eine zufällige ganze Zahl innerhalb des Intervalls [1, N] und Senden einer Antwort bei I = 1;
- für eine Nachricht der zweiten Art, Vergleich der Inkrementalnummer dieser Nachricht mit dem Wert der Variablen I und Unterdrückung der Antwort im Fall einer Abweichung.

## Claims

1. A method of managing collisions in a system for interchanging data between portable objects and at least one data transceiver terminal suitable for co-operating with a plurality of said portable objects present simultaneously in communicating range of the terminal, the method comprising the following successive steps:
a) the terminal sends out to the portable objects call messages of two different types, including:
(i) messages of a first type, and
(ii) messages of a second type, sent out in succession after a message of the first type and suitable for controlling in probabilistic manner a response from the portable objects;
b) a portable object conditionally sends a message to the terminal in response to the call with a probability that may be less than 100%, said response containing an identifier specific to the portable object;
c) the receiver receives a response from an identified portable object, and in the absence of said response colliding with a response sent out by another portable object, a specific data communication link is established by the terminal and the identified portable object, and data is then interchanged, after which the method returns to step a) for a new iteration; and
d) in the absence of collision-free reception, the method returns to step a) for a new iteration;
the method being ***characterized in that***
- the messages of the first type are Query messages including a parameter adapted to initialize the value of said probability of response by the portable objects as a function of said parameter; and
- the messages of the second type are Marker messages suitable for controlling the portable objects to modify said probability value in the absence of any prior response to a call message.

2. The method of claim 1, in which the portable objects respond selectively in time slots following the reception of Marker messages.

3. The method of claim 2, in which a time slot is selected in probabilistic manner by the portable objects drawing a random or pseudo-random number on receiving a Query message.

4. The method of any one of claims 1 to 3, in which the terminal sends out a Query message again on detecting a collision.

5. The method of any one of claims 1 to 4, in which, on receiving a Marker message and in the absence of a prior response to a call message, the portable object modulates the probability value as a function of the value of an index that is modified on receiving a Marker message.

6. The method of claim 5, in which said index is incremented on each occasion a new Marker message is received and is reinitialized on receiving a subsequent Query message.

7. The method of any one of claims 1 to 6, in which the terminal reduces the time interval between two successive call messages in the absence of any response from an identified portable object within a predetermined period.

8. The method of any one of claims 1 to 7, in which the portable object is capable of being inhibited from responding to call messages by receiving a specific message sent out by the terminal and containing an identifier corresponding to that of the portable object, inhibition being removed when the portable object is initialized and/or when it receives a message to that effect.

9. The method of claim 1, in which:
- the message of the first type includes a parameter having a value N;
- on reception of the message of the first type the probability of response is initialized to 1/N and the portable object responds with said probability 1/N;
- on reception of a message of the second type the probability of response of the portable object:
. is zero if the latter has replied to a message since the initialization,
. in the contrary case, changes on each reception of a message of the second type, with successive probability values of 1/(N-1), 1/(N-2) ... 1/2, 1.

10. The method of claim 9, including the following successive steps on reception of a message:
- for a message of the first type, setting a variable I to a random integer comprised in the range [1, N];
- for a message of the first or of the second type, transmitting a response when I = 1;
- for a message of the first or of the second type, decreasing by one the value of the variable I.

11. The method of claim 9, in which the messages of the second type are numbered by the terminal and the probability of response of the card is a function of said incremental number.

12. The method of claim 11, including the following successive steps on reception of a message:
- for a message of the first type, setting a variable I to a random integer comprised in the range [1, N] and transmitting a response when I = 1;
- for a message of the second type, comparing said incremental number to the value of the variable I and inhibiting the response in case of mismatch.
